# EUROPÄISCHE PATENTSCHRIFT

(11) **EP 0 617 093 B1**
(45) Veröffentlichungstag und Bekanntmachung des Hinweises auf die Patenterteilung: **16.12.1998**
(21) Anmeldenummer: 94104739.1
(22) Anmeldetag: 24.03.1994
(51) Int. Cl.: C09D 1/04

(54) **Verfahren zur Herstellung eines kunstharzdispersionsvergüteten silikatgebundenen Beschichtungssystems**
Method of producing a silicate-bonded coating hardened with a dispersion of synthetic resin
Méthode de préparation d'un revêtement lié par un silicate durci à l'aide d'une dispersion de résine synthétique

(30) Priorität: 24.03.1993 DE 4309625
(43) Veröffentlichungstag der Anmeldung: 28.09.1994
(73) Patentinhaber: STO AG, D-79778 Stühlingen (DE)
(72) Erfinder: Güntert, Manfred, D-79780 Stühlingen (DE); Zagermann, Rainer, D-79780 Stühlingen (DE)
(74) Vertreter: Patentanwälte Leinweber & Zimmermann

(56) Entgegenhaltungen:
- DE-A- 2 450 286
- DE-A- 2 454 980

## Beschreibung

Die Erfindung bezieht sich auf ein Verfahren zur Herstellung eines kunstharzdispersions-vergüteten silikatgebundenen Beschichtungssystems in Form von Anstrichstoffen, Spachtelmassen, Grundierungen, Wandbelägen und Putzen. Die Vergütung dieser Systeme mit Kunstharzdispersionen dient in bekannter Weise zur Stabilisierung der Systeme und zur Verbesserung des Feuchtigkeitsschutzes, der Haftung, der Kreidungsresistenz und der Verarbeitung. Dabei stellt das stark alkalische und elektrolythaltige Kaliwasserglas an die Pigmente, die Füllstoffe bzw. die Additive und vor allem an die Dispersionen hohe Anforderungen. Um lagerstabile, koagulatfreie Formulierungen zu erhalten, bedarf es des Einsatzes von alkali-, verseifungs- und wasserglasbeständigen Dispersionen.

Es hat sich nun gezeigt, daß Kaliwassergläser und Kunstharzdispersionen, die bei Raumtemperatur miteinander vermischt werden, nicht stabil sind. Sie koagulieren und flocken aus. Die Mischungen sind folglich nicht mehr brauchbar. Kaliwassergläser und Kunstharzdispersionen müssen deshalb getrennt bereitgestellt und vor Gebrauch während des Ansetzens bzw. bei Herstellung der Beschichtungsmaterialien schonend zugemischt werden.

Die Beschichtungsmaterialien neigen trotz des Zusatzes von Stabilisatoren nach der Herstellung zum Viskositätsanstieg, d.h. zum Eindicken. Ferner verlieren Anstrichstoffe auf Dispersions-Silikatbasis bei der Lagerung im Gebinde an Scheuerzyklen bei der Überprüfung der Waschbeständigkeit nach DIN 53778. Von Nachteil ist ferner, daß Mischungen aus Kaliwassergläsern und Kunstharzdispersionen nicht in einem Silo lagerfähig sind. Da die Komponenten getrennt gelagert werden müssen, binden sie somit Tankkapazitäten.

Es hat sich nun gezeigt, daß Dispersionen und Kaliwassergläser in jedem Verhältnis mischbar und lagerstabil sowie ohne Koagulatrückstände miteinander verträglich sind, wenn die kalte Mischung aus Kaliwasserglas und Acrylatmischpolymerisat auf Kunstharzdispersionsbasis unter Rühren während ca. 15 Minuten auf 50°C erwärmt wird. Ähnliche Ergebnisse lassen sich erzielen, wenn eine 80°C warme Polymerdispersion durch Zumischen von kaltem Kaliwasserglas auf 50°C abgekühlt wird. Bei Einsatz eines derartigen Beschichtungsystems hat sich die erreichte Viskositätsstabilität und die Tatsache als vorteilhaft herausgestellt, daß sie nur wenig nachdicken. Bei Systemen in Form von Anstrichstoffen haben sich höhere Scheuerzyklen nach DIN 53778 auch nach längerer Lagerung im Gebinde als positiv erweisen. Es ergeben sich Mischungen ohne Rückstände, d.h. Mischungen, die lagerstabil sind und zur Herstellung der eingangs erwähnten silikatgebundenen Beschichtungssysteme eingesetzt werden können.

Ein besonders rationeller Verfahrensablauf ergibt sich bei Verwendung des erwähnten zweiten Weges, wenn nach Herstellung einer Dispersion durch Polymerisation der Monomeren bei einer Temperatur von 80°C das anschließende Abkühlen der Dispersion durch Zumischen von kalten Kaliwassergläsern unter Rühren erfolgt. In diesem Fall bedarf es nämlich nicht einer vorherigen Mischung der Bestandteile, ehe sie auf die Temperatur von 50°C erwärmt werden. Die Wärmebehandlung findet vielmehr im Zuge der Dispersionsherstellung durch anschließendes Zumischen der kalten Kaliwassergläser statt.

An dieser Stelle ist zu erwähnen, daß es bereits bekannt ist (DE 2 450 286 A), das Beschichtungsmittel aus einem Gemisch von Wasserglaslösung und wäßrigen Dispersionen carboxylhaltiger Polymerisate herzustellen, allerdings durch Kombination von speziellen Kunststoffdispersionen mit ausgesuchten Wasserglastypen. Diese besonderen Bestandteile können in einem weiten Temperaturbereich von 10°C bis 100°C gemischt werden, zu dem auch Temperaturen um die Raumtemperatur und darunter gehören, um eine Mischung zu erzielen, die ausreichend lagerstabil ist. Eine gezielte Mischung bei erhöhter Temperatur von 50°C ist nicht Voraussetzung.

Ferner ist zu erwähnen, daß es bereits bekannt ist (DE 2 454 981 A), eine bestimmte erhaltene Mischung während einer Zeitspanne von 10 Minuten zur Gewinnung einer näher angegebenen Überzugsflüssigkeit zu rühren, um eine lagerstabile Mischung zu erhalten. Diese kann anschließend einem Stabilitätstest, wie er in der DIN 18556 zur Prüfung der Stabilität festgelegt ist, unterworfen werden, indem die Mischung erwärmt wird. Mit anderen Worten, bei diesem bekannten Verfahren erfolgt eine Wärmebehandlung nach Herstellung des Verfahrensproduktes im Rahmen eines Stabilitätstests, der nicht wesentlicher Bestandteil des Produktionsprozesses sein muß und nur der Qualitätssicherung dient.

Als besonders zweckmäßig hat es sich beim erfindungsgemäßen Verfahren herausgestellt, wenn als Kunstharzdispersion handelsübliche Styrol-/Acrylatdispersionen mit einer Mindestfilmbildtemperatur von 10 bis 25°C verwendet werden, beispielsweise Acronal^{R} 290 D der Firma BASF.

Vorteilhafterweise gelangen als Wassergläser Kaliwassergläser mit Gewichtsmodulen SiO₂:K₂O von von 2,0 bis 3,5:1 (Tri-/Tetrasilikate), beispielsweise Betolin^{R} K 28 bzw. BetolinR P 35 der Firma Woellner oder Trasol^{R} KCK der Firma Henkel zur Anwendung.

Anhand der beigefügten Diagramme sind die Vorteile des Verfahrens nach der Erfindung verdeutlicht, und zwar zeigen
- Fig. 1: die Abhängigkeit der Viskosität in mPas von der Lagerdauer t in w (Wochen) sowie
- Fig. 2: die Abhängigkeit der Scheuerzyklen n von der Lagerdauer t in w (Wochen).

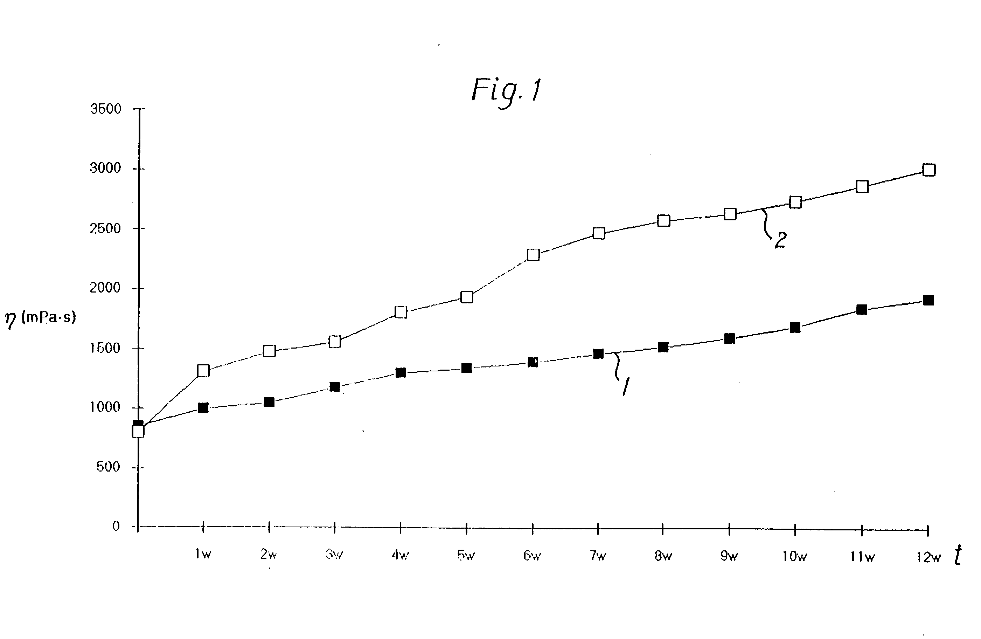

Wie Fig. 1 zeigt, nimmt bei Raumtemperatur die Viskosität in mPas bei mit wärmebehandelter Wasserglas-Dispersionsmischung hergestellter Dispersionsfarbe - Kurve 1 - bei Raumtemperatur im Verlauf eines längeren Zeitraums - 12 Wochen-nur relativ geringfügig zu. Sie steigt jedoch bei mit nicht wärmebehandelter Wasserglas-Dispersionsmischung hergestellter Innensilikatfarbe - Kurve 2 - während des gleichen Zeitraums ganz erheblich stärker an.

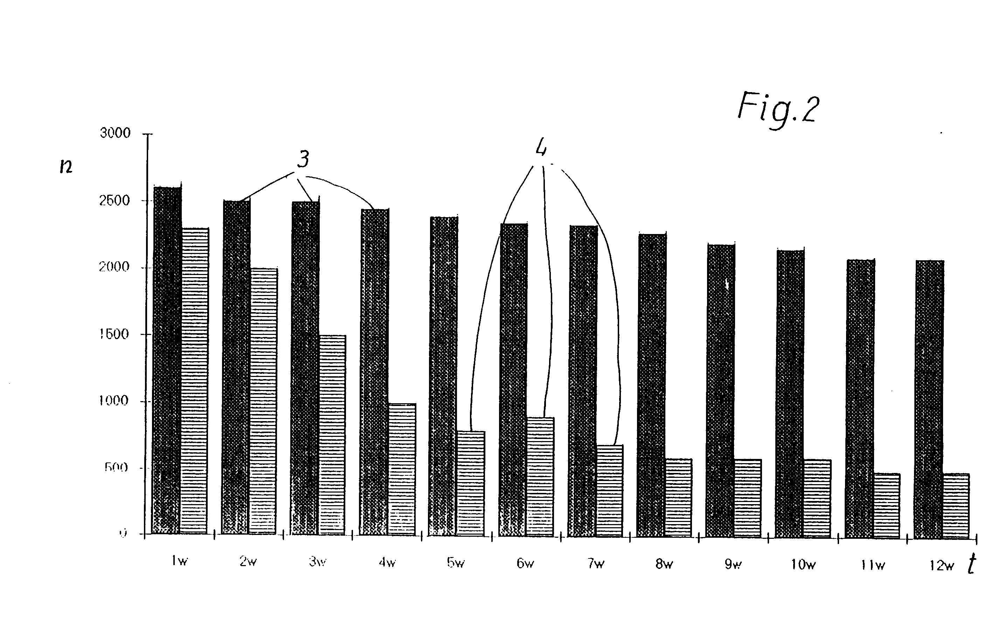

Aus Fig. 2 ist das Ergebnis der Überprüfung der Waschbeständigkeit nach DIN 53778 bei Lagerung der Farbe im Gebinde bis 12 Wochen ersichtlich. Wie aus dieser Figur hervorgeht, nimmt die Zahl der Scheuerzyklen bei mit wärmebehandelter Wasserglas-Dispersionsmischung hergestellter Innensilikatfarbe - jeweils durch die linken Säulen 3 veranschaulicht - über einen Zeitraum von 12 Wochen nur geringfügig ab. Bei mit nicht wärmebehandelter Wasserglas-Dispersionsmischung hergestellter Innensilikatfarbe - veranschaulicht durch die jeweils rechten Säulen 4 - nimmt sie ganz erheblich ab.

## Patentansprüche

1. Verfahren zur Herstellung eines kunstharzdispersions-vergüteten silikatgebundenen Beschichtungssystems in Form von Anstrichstoffen, Spachtelmassen, Grundierungen, Wandbelägen und Putzen, dadurch gekennzeichnet, daß die Mischung aus Kaliwasserglas und Acrylatmischpolymerisat auf Kunstharzdispersionsbasis unter Rühren während ca. 15 Minuten auf 50°C erwärmt oder daß eine 80°C warme Polymerdispersion durch Zumischen von kaltem Kaliwasserglas auf 50°C abgekühlt wird.

2. Verfahren nach Anspruch 1, dadurch gekennzeichnet, daß als Kunstharzdispersion handelsübliche Styrol-/Acrylatdispersionen mit einer Filmbildungstemperatur von 10 bis 25°C zur Anwendung kommen.

3. Verfahren nach einem der Ansprüche 1 oder 2, dadurch gekennzeichnet, daß als Wasserglas Kaliwassergläser mit Gewichtsmodulen SiO₂:K₂O von 2,0 bis 3,5:1 (Tri-/Tetrasilikate) eingesetzt werden.

4. Verfahren nach Anspruch 2, dadurch gekennzeichnet, daß als Kunstharzdispersion Acronal^{R} 290 D der Firma BASF verwendet wird.

5. Verfahren nach Anspruch 3, dadurch gekennzeichnet, daß als Wasserglas Betolin^{R} K 28 bzw. Betolin^{R} P 35 der Firma Woellner oder Trasol^{R} KCK der Firma Henkel eingesetzt wird.

## Claims

1. Process for the preparation of a silicate-bound coating system which is enhanced by a synthetic-resin dispersion and is in the form of paints, filling compositions, primers, renders and plasters, characterized in that the mixture of potassium silicate and acrylate copolymer based on a synthetic-resin dispersion is heated with stirring to 50°C for about 15 minutes or in that an 80°C hot polymer dispersion is cooled to 50°C by admixing cold potassium silicate.

2. Process according to Claim 1, characterized in that commerically available styrene/acrylate dispersions having a film-formation temperature of from 10 to 25°C are employed as the synthetic-resin dispersion.

3. Process according to one of Claims 1 or 2, characterized in that potassium silicates having weight moduli of SiO₂:K₂O of from 2.0 to 3.5:1 (tri-/tetrasilicates) are employed as silicate.

4. Process according to Claim 2, characterized in that the synthetic-resin dispersion used is Acronal® 290 D from BASF.

5. Process according to Claim 3, characterized in that the silicate employed is Betolin® K 28 or Betolin® P 35 from Woellner or Trasol® KCK from Henkel.

## Revendications

1. Procédé de préparation d'un système de revêtement lié par un silicate et traité avec une dispersion de résine synthétique, sous la forme de peintures, de mastics, d'apprêts, de revêtements muraux et de crépis, caractérisé en ce que le mélange de silicate de potassium et de copolymère d'acrylate à base d'une dispersion de résine synthétique est chauffé sous agitation à 50°C pendant environ 15 minutes ou bien une dispersion chaude du polymère à 80°C est refroidie à 50°C par l'addition de silicate de potassium froid.

2. Procédé suivant la revendication 1, caractérisé en ce qu'on utilise comme dispersion de résine synthétique, des dispersions de styrène/acrylate du type commercial ayant une température de formation de film de 10 à 25°C.

3. Procédé selon la revendication 1 ou 2, caractérisé en ce qu'on utilise comme verre soluble, des silicates de potassium ayant des rapports pondéraux SiO₂:K₂O de 2,0 à 3,5:1 (tri-/tétrasilicates).

4. Procédé suivant la revendication 2, caractérisé en ce qu'on utilise comme dispersion de résine synthétique le produit Acronal® 290 D de la firme BASF.

5. Procédé suivant la revendication 3, caractérisé en ce qu'on utilise comme verre soluble le produit Betolin® K 28 ou Betolin® P 35 de la firme Woellner ou le produit Trasol® KCK de la firme Henkel.
